# DEMANDE DE BREVET EUROPEEN

(11) **EP 1 602 476 A1**
(43) Date de publication de la demande: **07.12.2005**
(21) Numéro de dépôt: 05356095.9
(22) Date de dépôt: 26.05.2005
(51) Int. Cl.: B32B 3/26

(54) **Matériau en plaque ou en feuille à structure alvéolaire renforcée**

(30) Priorité: 02.06.2004 FR 0405940
(71) Demandeur: GAILLON, 69830 Saint Georges de Reneins (FR)
(72) Inventeur: Dupoyet, Guy, 69740 Genas (FR); Gaiffe, Xavier, 69460 Blace (FR)
(74) Mandataire: Maureau, Philippe

(57) **Abrégé**

L'invention concerne un matériau (1) en plaque ou en feuille à structure dite "alvéolaire", c'est-à-dire comprenant deux parois (2, 3) qui forment les faces principales du matériau et une série de cloisons (4), perpendiculaires à ces parois (2, 3), qui relient ces parois (2, 3) entre elles, l'espace entre deux cloisons et les parois (2, 3) définissant une alvéole (5), caractérisé en ce qu'au moins une des parois du matériau comprend au moins une nervure de renfort (6) s'étendant depuis la surface intérieure de ladite paroi vers l'intérieur de l'alvéole (5) correspondante, la hauteur h de ladite nervure de renfort (6) étant inférieure à la distance intérieure des deux parois.

## Description

La présente invention concerne un matériau en plaque ou en feuille à structure alvéolaire renforcée, réalisé en une matière thermoplastique.

Par matériau à structure "alvéolaire", on entend un matériau comprenant deux parois parallèles qui forment les faces principales du matériau et une série de cloisons, parallèles les unes aux autres et le plus souvent perpendiculaires à ces parois, qui relient ces parois entre elles.

Un matériau présentant une telle structure alvéolaire est connu. Ce matériau est réalisé en une pièce par extrusion, au moyen d'une extrudeuse dont la filière est équipée d'une filière de calibrage, cette filière de calibrage permettant de conférer à la matière extrudée ladite structure alvéolaire.

Selon les épaisseurs desdites parois et cloisons, ce type de matériau est utilisé notamment pour constituer des parois de bâtiments, telles que des toitures de vérandas, des panneaux publicitaires, des intercalaires ou des palettes de manutention, ou des boîtes pour archives, entre autres.

Le document EP 0 150 534, par exemple, décrit un matériau alvéolaire visant à permettre une bonne transmission de la lumière, typiquement utilisé pour les toitures de vérandas. A cet effet, l'une - au moins - des parois du matériau présente une face intérieure structurée, c'est-à-dire non lisse, ce qui provoque une transmission de la lumière différente selon le point considéré de la surface, et donc une bonne dispersion de la lumière.

Les matériaux alvéolaires connus présentent plusieurs inconvénients, à savoir :
- faible rigidité selon une direction perpendiculaire auxdites cloisons, qui induit un risque important de pliage involontaire selon cette direction ;
- risque d'écrasement du matériau lorsqu'il est soumis à une force de compression, l'ensemble des cloisons pouvant se plier dans le même sens par rapport aux parois respectives ;
- aspect de surface peu attractif, lesdites cloisons formant une série de lignes parallèles visibles sur la face extérieure desdites parois du fait de la formation de retassures lors du refroidissement du matériau à la fin de sa fabrication ;
- résistance insuffisante dans le sens longitudinal et également transversal, pour pouvoir utiliser ces matériaux dans certaines applications telles que le bâtiment.
- difficulté à rapporter des éléments par vissage dans le panneau, car cloisons souvent trop écartées.

La présente invention vise à remédier à ces inconvénients, avec un matériau réalisé en une matière thermoplastique, en plaque ou en feuille, à structure dite "alvéolaire", c'est-à-dire comprenant deux parois qui forment les faces principales du matériau et une série de cloisons, sensiblement perpendiculaires à ces parois, qui relient ces parois entre elles, l'espace entre deux cloisons et les parois définissant une alvéole.

Selon une définition générale de l'invention, au moins une des parois du matériau comprend au moins une nervure de renfort s'étendant depuis la surface intérieure de ladite paroi vers l'intérieur de l'alvéole correspondante, ladite nervure de renfort présentant une partie principale de profil sensiblement parallélépipédique et une hauteur (h) inférieure à la distance intérieure (H) entre les deux parois.

Les nervures de renfort, du fait de leur disposition qui crée une masse de matière éloignée par rapport au point de flexion du matériau, permettent d'augmenter le moment d'inertie statique de ce matériau, et donc d'augmenter considérablement sa résistance à la flexion, dans le sens longitudinal, et, dans une moindre mesure, dans le sens transversal.

Il est à noter que la ou les parois planes portant les nervures ne sont généralement pas modifiées, et notamment présentent la même épaisseur qu'en l'absence de nervures.

En outre, la multiplicité des nervures et leurs positions plus rapprochées les unes des autres que les cloisons habituelles rendent possible et aisé le vissage d'éléments sur le panneau alvéolaire, ce qui n'est pas le cas avec les matériaux alvéolaires connus.

Par ailleurs, puisque les nervures permettent de renforcer le matériau, il est possible que la distance entre deux cloisons successives soit plus importante que dans l'art antérieur. En conséquence, les lignes en creux apparaissant sur la surface extérieure des parois principales du matériau, du fait du retrait de matière lors du refroidissement de la matière thermoplastique, sont moins nombreuses. L'aspect esthétique du matériau alvéolaire en est donc amélioré.

Selon une forme d'exécution préférée mais non nécessaire de l'invention, les cloisons sont rectilignes et parallèles entre elles, et la ou les nervures de renfort sont également rectilignes.

Par exemple, la ou les nervures de renfort sont parallèles aux cloisons, c'est-à-dire perpendiculaires aux parois.

Avantageusement, l'extrémité libre d'au moins une nervure de renfort présente une section plus importante que la partie principale de ladite nervure. L'extrémité libre peut ainsi présenter un profil en "T", en "L", ou de forme sensiblement sphérique, ovoïde ou en goutte d'eau.

Ceci ajoute encore à la masse de matière déportée vers le centre de l'alvéole par rapport à la masse de matière constituant les parois, ce qui augmente encore la résistance à la flexion du matériau dans le sens longitudinal.

Selon une réalisation possible, la hauteur h des nervures et la distance intérieure H entre les deux parois vérifient : h > 0,2 H, voire 0,25 H < h <0,7 H.

De préférence, les nervures de renfort présentent une base élargie, qui assure leur liaison rigide à ladite paroi de cette première couche. Cette liaison rigide renforce l'efficacité mécanique des nervures de renfort, quant à l'augmentation de la résistance à la flexion du matériau dans le sens transversal.

Selon une forme préférée d'exécution de l'invention, les deux parois du matériau comprennent au moins une nervure de renfort s'étendant depuis la surface intérieure desdites parois vers l'intérieur de l'alvéole correspondante.

Les nervures de renfort situées sur chacune des deux parois sont par exemple disposées en regard les unes des autres, c'est-à-dire dans une disposition symétrique par rapport au plan de symétrie du matériau parallèle aux parois. Dans ce cas, on peut par exemple avoir : 0,25 H < h <0,45 H.

Enfin, le matériau selon l'invention peut comprendre, à sa sortie de filière d'extrusion, et avant son refroidissement complet, des surplus de matière disposés à la surface externe d'au moins une de ses parois, en regard des nervures de renfort.

De tels surplus de matière permettent avantageusement de gommer l'effet du retrait de matière lors du refroidissement du matériau.

À titre d'exemple non limitatif, les dimensions suivantes peuvent être indiquées pour un matériau ayant 6 à 8 mm d'épaisseur :
- épaisseur des parois : 0,2 à 0,5 mm ;
- espacement des cloisons : environ 6 mm ;
- hauteur des cloisons : 5 à 7 mm ;
- épaisseur des cloisons au niveau de leur base : 0,3 à 0,5 mm ; au niveau de leurs extrémités libres : 0,2 mm ;
- hauteur des nervures de renfort : environ 3 mm ;
- épaisseur des nervures de renfort au niveau de leur base : 0,3 à 0,5 mm ; au niveau de leurs extrémités libres : de 0,2 mm à 0,7 mm.

Pour sa bonne compréhension, l'invention est à nouveau décrite ci-dessous en référence au dessin schématique annexé représentant, à titre d'exemple non limitatif, une forme de réalisation préférée du matériau et du dispositif d'obtention de ce matériau, qu'elle concerne.
La figure 1 est une vue en perspective du matériau ;
La figure 2 en est une vue transversale ;
La figure 3 est une vue en perspective très agrandie d'une alvéole de ce matériau ;
Les figures 4 à 6 sont des vues très agrandies de profil en coupe transversale, montrant des variantes d'exécution des nervures de renfort ; et
La figure 7 est une vue similaire aux figures 4 à 6, montrant une variante d'exécution du matériau à la fin de sa fabrication, avant son refroidissement.

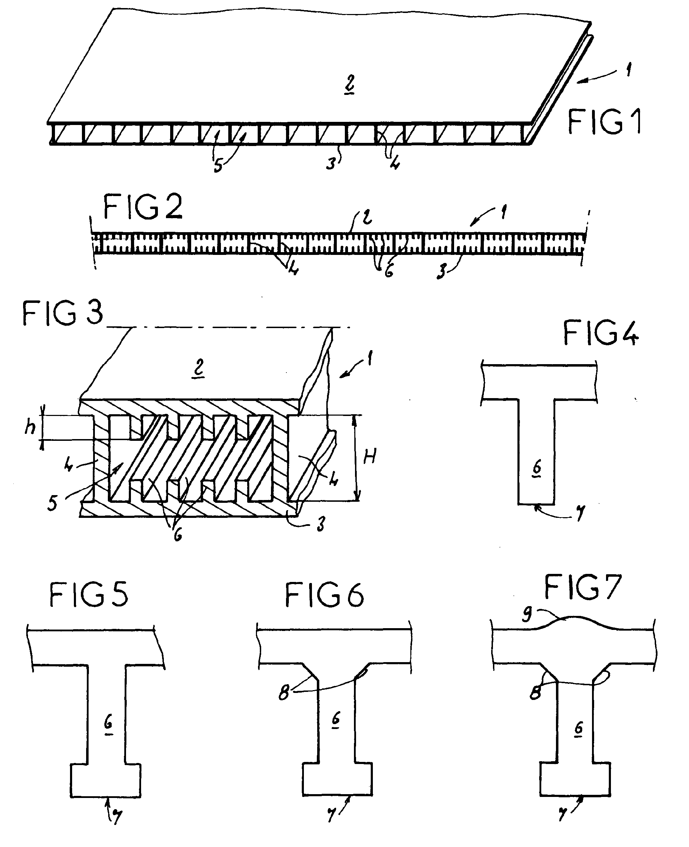

Les figures 1 et 2 représentent un matériau 1 en plaque ou en feuille à structure dite "alvéolaire", c'est-à-dire comprenant deux parois parallèles 2, 3 qui forment les faces principales du matériau 1 et une série de cloisons 4 perpendiculaires à ces parois 2, 3, qui relient ces parois 2, 3 entre elles. Le matériau est réalisé en une matière thermoplastique, telle qu'une polyoléfine, du polycarbonate, du PVC, du PMMA. L'espace entre deux cloisons 4 successives et les parois 2, 3 définit une alvéole 5.

Selon l'invention et comme cela est représenté aux figures 2 et 3, les parois 2, 3 du matériau comprennent chacune une série de nervures de renfort 6 s'étendant depuis la surface intérieure de chaque paroi 2, 3 vers l'intérieur de l'alvéole 5 correspondante, la hauteur h des nervures de renfort 6 étant ici inférieure à la moitié de la hauteur H des alvéoles correspondantes.

Comme cela est visible à la figure 3, les cloisons 4 sont rectilignes et parallèles entre elles, et les nervures de renfort 6 sont également rectilignes et parallèles aux cloisons 4.

Selon une première variante d'exécution représentée à la figure 4, les nervures 6 ont un profil sensiblement parallélépipédique. Par "sensiblement", on entend que le profil des nervures de renfort 6 peut être rectangulaire comme schématisé au dessin, mais que l'on peut envisager une légère dépouille, c'est-à-dire un profil légèrement tronconique depuis la base de chaque nervure avec un profil rétréci vers son extrémité libre, notamment afin d'améliorer le détachement des nervures depuis les rainures d'un rouleau de calandrage, lors d'une fabrication par extrusion - calandrage telle qu'elle sera expliquée plus en détail ci-après.

Selon une autre variante d'exécution représentée à la figure 5, l'extrémité libre 7 des nervures de renfort 6 a un profil en "T".

Dans une autre variante d'exécution de l'invention, qui peut éventuellement être combinée avec d'autres variantes d'exécution des nervures de renfort, comme cela est illustré à la figure 6, ces nervures de renfort 6 présentent une base 8 élargie.

Dans tous les cas, les nervures de renfort sont de préférence disposées en regard les unes des autres, c'est-à-dire dans une disposition symétrique par rapport au plan de symétrie du matériau, comme indiqué aux figures 2 et 3.

Enfin, comme cela est représenté à la figure 7, la filière de fabrication est conçue pour extruder un matériau dont les parois sont d'épaisseur augmentée vers l'extérieur, sous forme d'un bourrelet de matière 9 dans leur portion située en regard des nervures de renfort 6.

Ceci a pour but de gommer l'effet de retrait de matière lors du refroidissement du matériau en fin de fabrication, à la surface externe des parois, dans la zone située en regard des nervures de renfort. En effet, la formation des nervures de renfort entraîne un retrait supplémentaire, qui creuse la surface externe du matériau alvéolaire en regard desdites nervures, ce qui pourrait poser un problème pour la bonne imprimabilité du matériau obtenu. La filière (non représentée au dessin) comprend donc une série de gorges ménagées dans les parois supérieure et inférieure de ladite filière, en regard des fentes ménagées pour la formation des nervures de renfort.

En ce qui concerne la fabrication du matériau, deux variantes sont possibles.

Dans une première variante d'exécution, dans le cas où le profil de l'extrémité 7 des nervures de renfort 6 est de largeur inférieure ou égale à la largeur de la base 8 desdites nervures - c'est-à-dire sans contre-dépouille -, le matériau pourra être formé par un procédé classique d'extrusion à travers une filière plate, ou alternativement, le matériau pourra être fabriqué par un procédé d'extrusion - calandrage, qui a été décrit par exemple dans la demande de brevet français déposée par la demanderesse sous le numéro FR 2 828 132 A1 et qui comprend quant à lui les étapes consistant :
- à extruder une matière thermoplastique au moyen d'une extrudeuse de type classique et d'une filière plate classique conformant cette matière en une couche ;
- à utiliser une calandre comportant au moins un cylindre dans lequel sont aménagées des rainures ayant la forme recherchée pour lesdites nervures et à faire passer ladite couche contre ce cylindre alors que la matière de cette couche est à l'état plastique, de telle sorte que ce passage aménage, par fluage de la matière dans lesdites rainures, des nervures sur l'une des faces de cette couche, formant ainsi une première couche nervurée ;
- à utiliser deux cylindres d'assemblage, situés en aval du cylindre à rainures, et à faire passer ladite première couche ainsi constituée entre ces cylindres, et
- à alimenter une deuxième couche entre ces deux cylindres d'assemblage de telle sorte que cette deuxième couche passe entre ces cylindres sensiblement à la même vitesse que la première couche et vienne intimement en application sur les extrémités libres des nervures de cette première couche.

Dans le cas où les nervures de renfort 6 ont une extrémité libre 7 dont le profil a une largeur supérieure au profil de la base 8, seule une fabrication par extrusion classique à travers une filière pourra être envisagée.

Il va de soi que l'invention n'est pas limitée à la forme de réalisation décrite ci-dessus à titre d'exemple mais qu'elle en embrasse au contraire toutes les variantes de réalisation entrant dans le champ de protection défini par les revendications ci-annexées.

## Revendications

1. Matériau (1) en plaque ou en feuille à structure dite "alvéolaire", c'est-à-dire comprenant deux parois (2, 3) qui forment les faces principales du matériau et une série de cloisons (4), sensiblement perpendiculaires à ces parois (2, 3), qui relient ces parois (2, 3) entre elles, l'espace entre deux cloisons et les parois (2, 3) définissant une alvéole (5), ledit matériau étant réalisé en une matière thermoplastique, **caractérisé en ce qu'**au moins une des parois du matériau comprend au moins une nervure de renfort (6) s'étendant depuis la surface intérieure de ladite paroi vers l'intérieur de l'alvéole (5) correspondante, ladite nervure de renfort (6) présentant une partie principale de profil sensiblement parallélépipédique et une hauteur (h) inférieure à la distance intérieure (H) entre les deux parois.

2. Matériau selon la revendication 1, **caractérisé en ce que** les cloisons (4) sont rectilignes et parallèles entre elles, et **en ce que** la ou les nervures de renfort (6) sont rectilignes.

3. Matériau selon la revendication 2, **caractérisé en ce que** la ou les nervures de renfort (6) sont parallèles aux cloisons (4).

4. Matériau selon l'une des revendications 2 ou 3, **caractérisé en ce que** l'extrémité libre d'au moins une nervure de renfort (6) présente une section plus importante que la partie principale de ladite nervure (6).

5. Matériau selon la revendication 4, **caractérisé en ce que** l'extrémité libre de ladite nervure de renfort (6) présente un profil en "T", en "L", ou de forme sensiblement sphérique, ovoïde ou en goutte d'eau.

6. Matériau selon l'une des revendications 1 à 5, **caractérisé en ce que** h > 0,2 H.

7. Matériau selon l'une des revendications 1 à 6, **caractérisé en ce que** 0,25 H < h <0,7 H.

8. Matériau selon l'une des revendications 1 à 7, **caractérisé en ce que** la ou les nervures de renfort (6) présentent une base élargie.

9. Matériau selon l'une des revendications 1 à 8, **caractérisé en ce que** les deux parois (2, 3) du matériau comprennent au moins une nervure de renfort (6) s'étendant depuis la surface intérieure desdites parois vers l'intérieur de l'alvéole (5) correspondante.

10. Matériau selon la revendication 9, **caractérisé en ce que** les nervures de renfort (6) sont disposées en regard les unes des autres, c'est-à-dire dans une disposition symétrique par rapport au plan de symétrie du matériau parallèle aux parois (2, 3).

11. Matériau selon l'une des revendications 1 à 7, **caractérisé en ce qu'**il comprend à sa sortie de filière d'extrusion, et avant son refroidissement complet, des surplus de matière (9) disposés à la surface externe d'au moins une de ses parois (2, 3), en regard des nervures de renfort (6).
